**Europäisches Patentamt**

**European Patent Office**

**Office européen des brevets**

(11) Veröffentlichungsnummer : **0 024 610**
**B1**

(12) **EUROPÄISCHE PATENTSCHRIFT**

(45) Veröffentlichungstag der Patentschrift :
**13.07.83**

(21) Anmeldenummer : **80104713.5**

(22) Anmeldetag : **09.08.80**

(51) Int. Cl.³ : **B 29 B   5/04,** B 29 D 27/02

(54) Verfahren zum Füllen von Formwerkzeughohlräumen mit einem Reaktionsgemisch aus mindestens zwei fliessfähigen, einen massiven Kunststoff bildenden Reaktionskomponenten.

(30) Priorität : **24.08.79 DE 2934354**

(43) Veröffentlichungstag der Anmeldung :
**11.03.81 Patentblatt 81/10**

(45) Bekanntmachung des Hinweises auf die Patenterteilung : **13.07.83 Patentblatt 83/28**

(84) Benannte Vertragsstaaten :
**AT CH DE FR GB IT LI**

(56) Entgegenhaltungen :
**CH A 463 317**
**DE A 2 829 016**
**US A 2 781 547**
**US A 3 982 870**

(73) Patentinhaber : **BAYER AG**
**Zentralbereich Patente, Marken und Lizenzen**
**D-5090 Leverkusen 1, Bayerwerk (DE)**

(72) Erfinder : **Boden, Heinrich**
**Sperberweg 14**
**D-5090 Leverkusen 3 (DE)·**
Erfinder : **Schneider, Walter, Ing.-grad.**
**Christian-Heesen-Strasse 21**
**D-5063 Overath (DE)**

**Verfahren zum Füllen von Formwerkzeughohlräumen mit einem Reaktionsgemisch aus mindestens zwei fließfähigen, einen massiven Kunststoff bildenden Reaktionskomponenten**

Die Erfindung richtet sich auf ein Verfahren zum Füllen von Formwerkzeughohlräumen mit einem Reaktionsgemisch aus mindestens zwei fließfähigen, einen massiven Kunststoff bildenden Reaktionskomponenten, bei dem die Reaktionskomponenten in eine Mischzone eingebracht und im Durchlauf vermischt werden und anschließend das Gemisch in den Formwerkzeughohlraum sowie in einen zusätzlichen, nur zeitweise vorhandenen Hohlraum geleitet wird, wobei eine auf das Volumen des formgebenden Formwerkzeughohlraumes abgestimmte Gemischmenge in den Gesamthohlraum eingetragen wird.

Die Erfindung bezweckt das Herstellen von in Formwerkzeugen geformten Artikeln aus massivem Kunststoff, worunter auch noch eine mikrozellulare Beschaffenheit dieses Kunststoffes zu verstehen ist.

Massive, absolut blasenfreie Formteile, beispielsweise solche aus reaktionsgegossenen PUR-Elastomeren, werden weitgehend in offenen Formwerkzeugen hergestellt, z. B. im sogenannten offenen Guß. Hierbei wird das fließfähige, niedrig aktivierte Mehrkomponentenreaktionsgemisch langsam unter Vermeidung von Blaseneinschlüssen wirbel und turbulenzfrei in das Formwerkzeug eingegossen. An der freien Oberfläche werden gegebenenfalls entstehende Luftblasen durch Abfackeln mit einer Brennerflamme zerstört.

Man hat auch versucht, in Formwerkzeugen mit geschlossenem Formhohlraum blasenfreie und lunkerfreie massive Formteile, insbesondere auch aus hochreaktiven Mehrkomponentenreaktionsgemischen herzustellen, um auch für die wirtschaftliche Großserienfertigung solcher meist großvolumiger Formteile kurze Zykluszeiten realisieren zu können. Die Verwendung von selbstreinigenden, zwangsgesteuerten Injektionsanbaumischköpfen und die Kenntnis über den laminaren Füllvorgang unter Vermeidung von Lufteinschlüssen durch Aufbau einer geschlossenen Fließfront durch das in den Formwerkzeughohlraum mit hoher Geschwindigkeit eintretende Reaktionsgemisch ermöglichen auch die Fertigung meist dünnwandiger Formteile aus solchen hochreaktiven Mehrkomponentengemischen, beispielsweise auf PUR-Basis.

Die bisher eingesetzten Dosiergeräte mit Injektionsmischern lassen aber alle nur die Dosierung einer vorher fest eingestellten Gesamtdosiermenge zu. Es ist aber bekannt, daß Formwerkzeuge zur Herstellung gleicher Formteile, wie sie beispielsweise in der Automobilindustrie für die Großserienfertigung laufend benutzt werden, fertigungsbedingte Toleranzen in ihren Formwerkzeughohlräumen aufweisen. Das heißt, die Volumina der Hohlräume gleicher Formwerkzeuge weichen geringfügig voneinander ab. Um nun beim aufeinanderfolgenden Füllen solcher Formwerkzeuge mittels desselben Dosieraggregates diese Volumenunterschiede zu eliminieren, werden die Formwerkzeuge mit zuviel Reaktionsgemisch beschickt und die überschüssige Menge über die Trennebene, Entlüftungskanäle oder in verlorenen Steigern abgeführt bzw. aufgefangen. Nachteilig dabei sind die Materialverluste und die erforderliche Nacharbeit zum Entfernen des Austriebes. Insbesondere bei der Fertigung von größeren Formteilen, wozu eine große Menge Reaktionsgemisch wegen der kurzen Verfestigungszeiten innerhalb weniger Sekunden in den Formwerkzeughohlraum eingetragen werden muß, besteht das Problem, daß die im Formwerkzeughohlraum enthaltene Luft zwar anfangs zügig entweichen kann, daß aber mit zunehmendem Füllgrad die zur Entlüftung zur Verfügung stehende Fläche in den meisten Fällen zwangsläufig immer stärker reduziert wird. Dabei verstärkt sich das Entlüftungsproblem insbesondere dann, wenn der Formwerkzeughohlraum so gestaltet ist, daß der Querschnitt des zuletzt zu füllenden Teiles sich verengt und somit die Fließfront rascher fortschreitet. Es besteht dann die Gefahr von Lufteinschlüssen.

Schließlich wirkt sich auch wegen der kurzen Dosierzeiten die Schaltungsungenauigkeit der für die Steuerung des Dosiervorganges eingesetzten Zeituhren aus. Die gegenwärtig zur Verfügung stehenden Zeituhren haben beispielsweise einen Fehler von max. 0,5 %, bezogen auf den eingestellten Endwert. Ist dieser Endwert beispielsweise 3 Sekunden, so ergibt sich bei einer Dosierzeit von 1 Sekunde schon ein Fehler von 1,5 %. Der Gesamtfehler wird vergrößert durch zusätzliche Zeitfehler, die beispielsweise durch die Umsetzung des elektrischen Steuerimpulses über die Umsteuerung eines hydraulischen Ventils und die dadurch ausgelöste mechanische Umsteuerung der Steuerorgane, wie Schieber oder Ventile, zur Betätigung des Mischkopfes, entstehen. Zusätzlich können sich Schwankungen in der Hydrauliköltemperatur fehlervergrößernd auswirken. Auf diese Weise kann sehr leicht ein Gesamtfehler von 2 % und darüber, bezogen auf die Formfüllzeit zwischen Umsteuerung des Mischers aus Kreislauf in Mischstellung und nach dem Füllvorgang von Mischstellung in Kreislaufstellung zurück, entstehen. Bei der Herstellung von Formteilen mit einem durchaus üblichen Volumen von beispielsweise 5 l ergibt sich damit bei einer Formfüllzeit von 1 Sekunde ein Gesamtfehler im Füllvolumen von rund 100 ml.

Bei der vorbeschriebenen Überfüllung der Formwerkzeuge ist weiterhin ein Druckanstieg im Formwerkzeughohlraum und damit auch in der mit dem Formwerkzeughohlraum verbundenen Injektionsmischkammer gekoppelt. Dieser Druckanstieg beeinflußt zwangsläufig die Mischbedingungen und kann die Mischgüte beeinträchtigen.

Beim Spritzgießen von Thermoplasten in Formwerkzeuge ist es bekannt (US-A-2 781 547), die thermische Schrumpfung des Thermoplasten dadurch auszugleichen, daß man dem eigentlichen formgebenden Formwerkzeughohlraum einen zusätzlichen Speicherhohlraum zuordnet, der einen unter Federdruck stehenden Kolben aufweist. Beim Füllen des Formwerkzeuges wird mittels des zur Füllung dienenden Extruders ein solcher Druck auf die eingefüllte Masse aufgebracht, daß besagter Kolben gegen den Federdruck zurückweicht und der gesamte Formwerkzeughohlraum von der Masse ausgefüllt wird. Sobald beim Erkalten der thermoplastischen Masse die thermische Schrumpfung eintritt, wird wegen des inzwischen herabgesetzten Druckes des Extruders der Kolben unter dem Federdruck in Richtung formgebender Hohlraum gedrückt und verdrängt dabei gespeicherte Masse, welche nun das Schrumpfvolumen ausgleicht. Beim Verarbeiten von Mehrkomponentenreaktionsgemischen, die durch Injektionsvermischung in einer Mischkammer hergestellt werden, ist dieses Verfahren nicht anwendbar, weil der sich beim Überfüllen aufbauende Druck nachteilig auf den Mischvorgang einwirkt und das Eindringen des flüssigen Reaktionsgemisches zwischen Trennkanten das Entstehen von Austrieb fördert. Außerdem verursacht die Überfüllung Materialvergeudung.

Beim Herstellen von Schaumstoffartikeln aus einem Mehrkomponentenreaktionsgemisch in einem Formwerkzeug (US-A-3 982 870) ist die Verwendung eines zusätzlichen Speicherhohlraumes zum eigentlichen formgebenden Formwerkzeughohlraum bekannt. Hier ist gegenüber dem Mischkammerauslaß ein in einer Bohrung geführter Kolben angeordnet, der vor Beginn des Mischvorganges einen Speicherhohlraum freigibt, um etwaige zu Beginn des Mischvorganges unvollkommen vermischte Komponentenanteile aufzufangen, wo sie mit den nachfolgenden Gemischanteilen verwirbelt werden. Noch vor Ende des Mischvorganges wird der Speicherhohlraum mittels des Kolbens verdrängt, um eine geschlossene Formteiloberfläche zu erhalten. Eine sonstige Einflußnahme auf den Füllvorgang des Formwerkzeuges wird durch dieses Dokument weder gelehrt noch nahegelegt.

Es gilt die Aufgabe zu lösen, eine exakte, blasen- und lunkerfreie Füllung von Hohlräumen von Formwerkzeugen, bei vereinfachter Entlüftung der Hohlräume gegen und nach Ende des Formfüllvorganges sicherzustellen, wobei vorzugsweise ein gegebenenfalls vorwählbarer Druck im gesamten, sich von der Mischkammer bis in den Formwerkzeughohlraum erstreckenden System kontrolliert und zeitlich gesteuert werden kann.

Diese Aufgabe wird dadurch gelöst, daß der Formwerkzeughohlraum während des Einfüllens des Reaktionsgemisches um den zusätzlichen Hohlraum erweitert wird, daß der Gesamthohlraum nur unvollständig mit Reaktionsgemisch ausgefüllt wird, daß nach Beendigung des Gemischeintrages zu einem vorgewählten Zeitpunkt innerhalb der fließfähigen Phase des Reaktionsgemisches durch Verkleinerung des zusätzlichen Hohlraumes das gespeicherte Reaktionsgemisch mindestens teilweise in den Formwerkzeughohlraum verdrängt wird und daß die Verdrängung des Volumens des zusätzlichen Hohlraumes derart vorgenommen wird, daß die Ausfüllung des Volumens des Formwerkzeughohlraumes unter einer geringeren Strömungsgeschwindigkeit als derjenigen während des vorhergehenden Füllvorganges erfolgt.

Dabei erfolgt die Volumenvergrößerung vorzugsweise gegen Ende der Misch- und Füllphase, wenn bereits ein schnelles Fortschreiten der Fließfront zu erwarten wäre. Sie kann aber auch eher stattfinden. Die Speicherung eines Teiles des Gemisches durch Schaffen des zusätzlichen Hohlraumes bewirkt eine Reduzierung der Anstiegsgeschwindigkeit des Füllspiegels bzw. der Geschwindigkeit einer durch das Reaktionsgemisch gebildeten Fließfront, so daß die sorgfältige Entlüftung des Formwerkzeughohlraumes sichergestellt ist und auch Schikanen im Hohlraum ohne Lufteinschlüsse umflossen werden. Sind Formwerkzeughohlräume gleichen Volumens zu füllen, wie beispielsweise bei der Serienfertigung von gleichartigen Formteilen mit mehreren Formwerkzeugen, so wählt man den zusätzlichen Hohlraum vorzugsweise in der Größe der Toleranzdifferenz der Volumina dieser Formwerkzeughohlräume.

Dadurch, daß der eigentliche Formfüllvorgang mit Beendigung des Mischvorganges bzw. mit dem Entleeren der Mischkammer abgeschlossen ist, und zwar bevor die gespeicherte Gemischmenge verdrängt wird und den letzten Teil des formgebenden Formwerkzeughohlraumes ausfüllt, entsteht eine absolute Beruhigung der Fließfront. In diesem Zeitintervall kann sich ein durch nicht entwichene Luft erfolgter geringer, jedoch unkontrollierter Druckaufbau wieder abbauen. Der Zeitpunkt, zu dem das gespeicherte Gemisch verdrängt wird, ist in seiner Wahl von der Reaktionsgeschwindigkeit des Gemisches abhängig. Es versteht sich, daß die Verdrängung spätestens zu jenem Zeitpunkt stattfinden muß, zu dem das Gemisch noch so fließfähig ist, daß es das gesamte Volumen des formgebenden Formwerkzeughohlraumes ausfüllen kann, ohne daß innere Spannungen durch die beginnende Verfestigung entstehen.

Vorzugsweise wird der gespeicherte Gemischanteil unter einem definierten, gegebenenfalls zeitlich veränderbaren, Druck verdrängt. Dieser Druck wird vorzugsweise so lange aufrechterhalten, bis die hochviskose Aushärtephase im wesentlichen abgeschlossen ist, so daß die in dieser Phase auftretende Reaktionsschwindung zumindest teilweise durch Nachschieben des Materials aus dem Speicher ausgeglichen wird. Dabei kann der Druck erforderlichenfalls auch während dieser Zeit verändert werden. Da während des eigentlichen Mischvorganges kein Überfüllen des Hohlraumes stattfindet, können auch keine nachteiligen Rückwirkungen auf die Vermischung, beispielsweise durch Druckerhöhung in der Mischkammer, entstehen. Das neue Verfahren erlaubt weiterhin, die Größe der Entlüftungsschlitze zu reduzieren, wodurch der Austrieb verringert wird. Auch der unerwünschte Austrieb in der Formtrennebene läßt sich auf diese Weise weitgehend beseitigen. Dadurch verringert sich die aufwendige Nachbearbeitung von Formteilen.

Zur Speicherung von Reaktionsgemisch in dem zusätzlichen Hohlraum eignen sich verschiedene Konstruktive Lösungen.

Beispielsweise kann dem Mischkammerauslaß gegenüber in einer Speicherbohrung ein verschiebbarer und steuerbarer Kolben angeordnet sein, wenn es sich um ein Formwerkzeug mit angebautem Mischkopf und ohne Angießkanal handelt. Ist ein Angießkanal vorhanden, so wird man den Speicher vorzugsweise in seinem Bereich anordnen. Besonders geeignet ist auch ein Speicher, der eine elastische Membran aufweist, die rückseitig in ihrem gedehnten Zustand gegen eine feste Kontur anliegt, wobei der Zwischenraum zwischen dieser Kontur und der Membran hydraulisch oder pneumatisch beaufschlagbar ist. Durch Füllen bzw. Leeren dieses Zwischenraumes läßt sich der Speichervorgang durchführen.

Schließlich ist es auch möglich, in analoger Weise die Wandung des Hohlraumes des Formwerkzeuges zumindest teilweise mit einer solchen elastischen Membran auszustatten bzw. als elastische Membran auszubilden. Dies ist allerdings nur zweckmäßig, wenn auf die Genauigkeit der Konturen des Formteils im Bereich der elastischen Membran kein großer Wert gelegt wird.

Das neue Verfahren wird nachstehend anhand verschiedener, für die Durchführung des Verfahrens geeigneter Vorrichtungen in Verbindung mit diesen näher beschrieben. Es zeigen:

Figuren 1 bis 5 eine Vorrichtung, bei der ein Ausstoßkolben-Mischkopf und ein Kolbenspeicher in den Formhälften eines Formwerkzeuges integriert sind, und zwar in verschiedenen Stellungen des Ausstoßkolbens und des Kolbenspeichers;

Figur 6 eine Vorrichtung, bei der ein Ausstoßkolben-Mischkopf und ein Membranspeicher in den Formhälften eines Formwerkzeuges integriert sind, und

Figur 7 eine Vorrichtung, bei der ein Mischkopf einem Formwerkzeug mit elastischen Formwandungsbereichen zugeordnet ist.

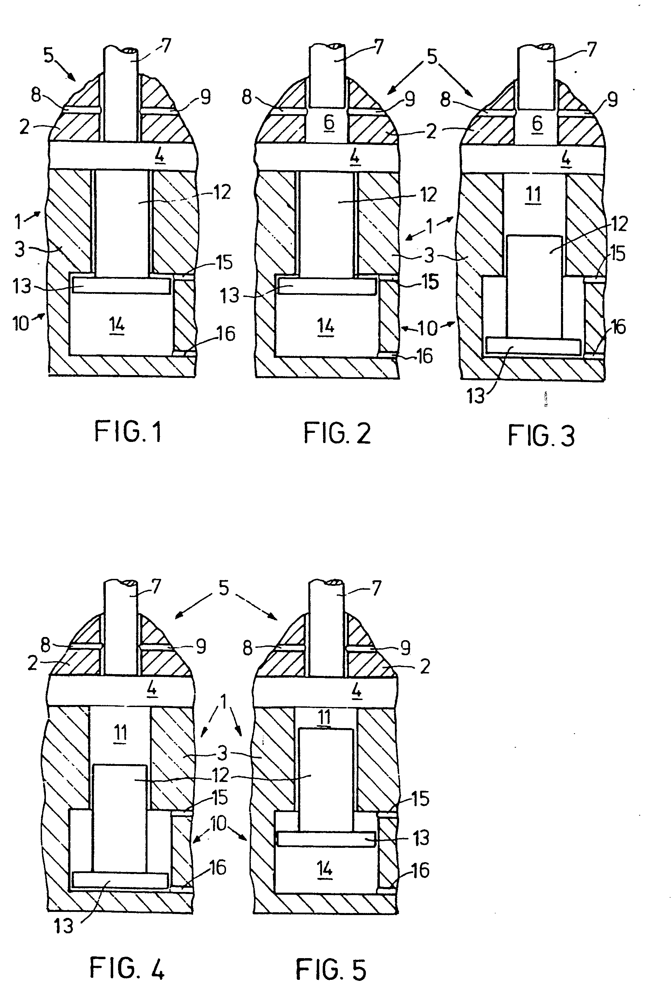

In Fig. 1 bis 5 besteht die Vorrichtung aus einem Formwerkzeug 1 mit zwei Formhälften 2, 3, die einen Formwerkzeughohlraum 4 einschließen. In der Formhälfte 2 ist ein Mischkopf 5 angedeutet, der im wesentlichen aus einer Mischkammer 6 besteht, in der ein Ausstoßkolben 7 geführt ist. Dieser dient sowohl dem Öffnen und Abschließen der Düsenöffnungen 8, 9, als auch dem Ausstoßen von Gemischresten aus der Mischkammer 6 zum Zwecke der Reinigung. Gegenüber der Mischkammer 6 ist in der Formhälfte 3 ein Kolbenspeicher 10 zur Bildung des zusätzlichen Hohlraumes angeordnet. In seiner Bohrung 11, deren Achse mit derjenigen der Mischkammer 6 übereinstimmt, ist ein beidseitig beaufschlagbarer Kolben 12 geführt, dem ein durch einen Kragen 13 des Kolbens 12 unterteilter Druckmittelraum 14 zugeordnet ist. Er ist mit Druckmittelanschlüssen 15, 16 versehen. Die Steuerung für das Druckmittel sowie die Mischkopf-Steuerung sind nicht näher ausgeführt. Ihr Aufbau ergibt sich für den Fachmann zwangsläufig aus den erforderlichen Verfahrensschritten, die nachstehend beschrieben sind:

Fig. 1 zeigt die Vorrichtung in Ruhestellung, d. h. mit ungefülltem Formwerkzeug 1. In Fig. 2 ist der Ausstoßkolben 7 zurückgefahren, so daß die Mischkammer 6 gebildet ist, in welche nun die Komponenten über die Düsenöffnungen 8, 9 injiziert werden. Während des Einströmens des in der Mischkammer 6 erzeugten Reaktionsgemisches in den Formwerkzeughohlraum 4 wird der Kolben 12 zurückgefahren (Fig. 3), so daß sich das Volumen des Formwerkzeughohlraumes 4 um das zusätzlich vom Kolben 12 freigegebene Hohlraumvolumen der Bohrung 11 vergrößert. Dadurch wird die Strömungsgeschwindigkeit des Gemisches im Hohlraum 4 verringert und in dem zusätzlichen Hohlraumvolumen 11 Gemisch gespeichert. Nun strömt solange Reaktionsgemisch in den Formwerkzeughohlraum 4 ein, wie vorgesehen ist. Alsdann führt (Fig. 4) der Ausstoßkolben 7 eine Hubbewegung aus, womit die Düsenöffnungen 8, 9 verschlossen werden und die Mischkammer 6 entleert und verdrängt wird. Anschließend wird der Kolben 12 wieder vorgeschoben (Fig. 5) und zwar derart, daß dabei die Strömungsgeschwindigkeit des Gemisches geringer gehalten wird als während des eigentlichen Füllvorganges. Dabei füllt der Kolben 12 das Volumen der Bohrung 11 allmählich wieder aus.

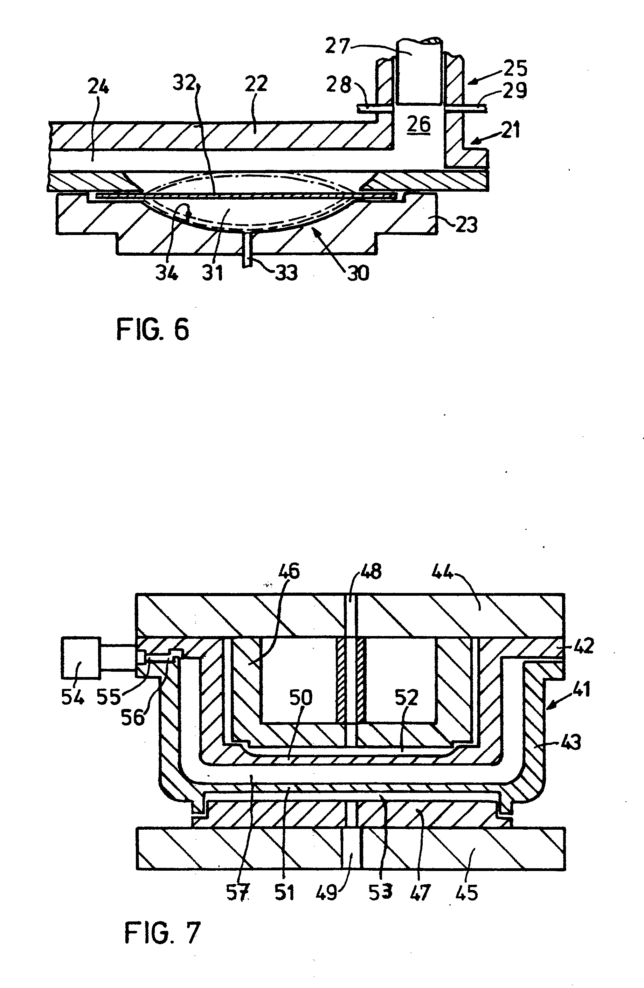

In Fig. 6 besteht die Vorrichtung aus einem Formwerkzeug 21 mit zwei Formhälften 22, 23, zwischen denen ein Formwerkzeughohlraum 24 eingeschlossen ist. In der oberen Formhälfte 22 ist ein Mischkopf 25 angedeutet, der im wesentlichen aus einer Mischkammer 26 besteht, in der ein Ausstoßkolben 27 geführt ist. Dieser dient sowohl zum Öffnen und Schließen der Düsenöffnungen 28, 29, als auch zum Ausstoßen des Gemischrestes aus der Mischkammer 26 zum Zwecke ihrer Reinigung. In der unteren Formhälfte 23 ist ein Membranspeicher 30 angeordnet. Er besteht aus einem mit Druckmittel (hydraulisch oder pneumatisch) beaufschlagbarem Hohlraum 31, der zum Formwerkzeughohlraum 24 hin durch eine elastische Membran 32 aus Gummi abgesperrt ist. Dieser Hohlraum 31 ist über einen Anschluß 33 mit einer nicht dargestellten Druckmittelquelle und entsprechenden Steuerorganen verbunden.

Im Ruhezustand der Vorrichtung befindet sich die Membran 32 in ungestreckter Stellung (ausgezogene Linien). Wird nun Reaktionsgemisch in den Formwerkzeughohlraum 24 eingebracht, so dehnt sich die Membran 32 und legt sich an die Wandung 34 des schalenförmigen Hohlraumes 31 an (gestrichelte Linie), wodurch das Volumen des Formwerkzeughohlraumes 24 entsprechend um das zusätzliche Volumen des Hohlraumes 31 vergrößert wird. In diesem freigegebenen Volumenbereich findet eine Speicherung von Reaktionsgemisch statt. Nach Beendigung des Formfüllvorganges wird der Hohlraum 31 durch den Anschluß 33 mit einem Druckmedium beschickt, so daß die Membran 32 wieder ihre ursprüngliche Lage einnimmt. Dabei wird das verdrängte Reaktionsgemisch in den eigentlichen Formwerkzeughohlraum 24 gedrückt. Die Membran 32 kann aber darüber hinaus noch weiter in den Formwerkzeughohlraum 24 durchgedrückt werden (strichpunktierte Lage), um darin höheren Druck zu erzeugen. In diesem Fall muß das Formteil eine entsprechende Oberflächenformgebung zulassen.

Die sonstigen Verfahrensbedingungen bezüglich Strömungsgeschwindigkeit usw. entsprechen denjenigen, wie sie in Verbindung mit Fig. 1 bis 5 beschrieben worden sind.

Fig. 7 zeigt eine ähnlich aufgebaute Vorrichtung wie Fig. 6. Die Vorrichtung besteht aus einem Formwerkzeug 41 mit den Formhälften 42, 43. Diese sind zwischen zwei Preßplatten 44, 45 eines nicht näher dargestellten Formträgers eingespannt. Auf den Preßplatten 44, 45 sind Zentrierstücke 46, 47 angeordnet, durch welche Druckmittelanschlüsse 48, 49 hindurchführen. Auf den Zentrierstücken 46, 47 sind die Formhälften 42, 43 angeordnet. Sie bestehen aus Galvanoschalen mit dünnwandigen Bodenbereichen 50, 51, so daß zwischen diesen Bodenbereichen 50, 51 und den Zentrierstücken 46, 47 als Druckkammern dienende Hohlräume 52, 53 vorgesehen sind. In diese münden die Druckmittelanschlüsse 48, 49. Ein Mischkopf 54 ist in der Formtrennebene 55 angesetzt und ist über einen Angießkanal 56 mit dem Formwerkzeughohlraum 57 verbunden.

Beim Füllen des Formwerkzeughohlraumes 57 können sich die Bodenbereiche 50, 51 bei besonders dünnwandiger Ausführung durch elastische Verformung in die Hohlräume 52, 53 hineinwölben, so daß sich der Formwerkzeughohlraum 57 zunächst um ein zusätzliches Volumen vergrößert. Nach beendeter Füllung werden die Hohlräume 52, 53 über die Anschlüsse 48, 49 mit Druckmittel beaufschlagt, so daß die Bodenbereiche 50, 51 wieder in Richtung ihrer ursprünglichen Stellung zurückgedrückt werden. Der Zeitpunkt der Druckmittelbeaufschlagung läßt sich bis zu jenem Zeitpunkt wählen, an dem eine Verfestigung des Gemisches durch Reaktion eintritt. Bei diesem Formwerkzeug geschieht die Druckbeaufschlagung des Reaktionsgemisches in vorteilhafter großflächiger Weise. Es eignet sich insbesondere zum Auffangen der Reaktionsschwindung und damit zur Reduzierung von Einfallstellen im Bereich von Materialanhäufungen des Formteils.

Ein ähnlicher Effekt läßt sich auch durch die Verwendung von Formwerkzeugen mit Tauchkantenabdichtung erzielen. Hierbei wird die Ausfüllung des Formwerkzeughohlraumes nach Eindosieren der erforderlichen Reaktionsgemischmenge durch Eintauchen einer Formhälfte in die andere und entsprechende Volumenverkleinerung realisiert.

**Ansprüche**

1. Verfahren zum Füllen von Formwerkzeughohlräumen (4 ; 24 ; 57), mit einem Reaktionsgemisch aus mindestens zwei fließfähigen, einen massiven Kunststoff bildenden Reaktionskomponenten, bei dem die Reaktionskomponenten in eine Mischzone (6 ; 26 ; 54) eingebracht und im Durchlauf vermischt werden und anschließend das Gemisch in den Formwerkzeughohlraum (4 ; 24 ; 57) sowie in einen zusätzlichen, nur zeitweise vorhandenen Hohlraum (11 ; 31 ; 52, 53) geleitet wird, wobei eine auf das Volumen des formgebenden Formwerkzeughohlraumes (4 ; 24 ; 57) abgestimmte Gemischmenge in den Gesamthohlraum eingetragen wird, dadurch gekennzeichnet, daß der Formwerkzeughohlraum (4 ; 24 ; 57) während des Einfüllens des Reaktionsgemisches um den zusätzlichen Hohlraum (11 ; 31 ; 52 ; 53) erweitert wird, daß der Gesamthohlraum nur unvollständig mit Reaktionsgemisch ausgefüllt wird, daß nach Beendigung des Gemischeintrages zu einem vorgewählten Zeitpunkt innerhalb der fließfähigen Phase des Reaktionsgemisches durch Verkleinerung des zusätzlichen Hohlraumes (11 ; 31 ; 52, 53) das gespeicherte Reaktionsgemisch mindestens teilweise in den Formwerkzeughohlraum (4 ; 24 ; 57) verdrängt wird und daß die Verdrängung des Volumens des zusätzlichen Hohlraumes (11 ; 31 ; 52, 53) derart vorgenommen wird, daß die Ausfüllung des Volumens des Formwerkzeughohlraumes (4 ; 24 ; 57) unter einer geringeren Strömungsgeschwindigkeit als derjenigen während des vorhergehenden Füllvorganges erfolgt.

2. Verfahren nach Anspruch 1, dadurch gekennzeichnet, daß der gespeicherte Gemischanteil unter einem definierten Druck verdrängt wird.

3. Verfahren nach Ansprüchen 1 oder 2, dadurch gekennzeichnet, daß das im Formwerkzeughohlraum (4 ; 24 ; 57) befindliche Gemisch auch während des Aushärtens mindestens zeitweise unter Druck gehalten wird.

4. Verfahren nach Anspruch 3, dadurch gekennzeichnet, daß der während der Aushärtephase angelegte Druck veränderbar ist.

**Claims**

1. A process for filling mould cavities (4 ; 24 ; 57) with a reaction mixture comprising at least two flowable reaction components which form a solid plastic material, in which the reaction components are introduced into a mixing zone (6 ; 26 ; 54) and are mixed during passage, then the mixture is conveyed into the mould cavity (4 ; 24 ; 57) and into an additional cavity (11 ; 31 ; 52 ; 53) only available at times, a quantity of mixture adapted to the volume of the shape-giving mould cavity (4 ; 24 ; 57) being introduced into the total cavity, characterised in that the mould cavity (4 ; 24 ; 57) is enlarged during introduction of the reaction mixture by the additional cavity (11 ; 31 ; 52 ; 53), the total cavity is filled only incompletely with reaction mixture, the stored reaction mixture is displaced at least in part into the mould cavity (4 ; 24 ; 57) after completion of introduction of the mixture at a predetermined moment within the flowable phase of the reaction mixture by reduction of the additional cavity (11 ; 31 ; 52 ; 53) and the displacement of the volume of the additional cavity (11 ; 31 ; 52 ; 53) is effected in such a way that the volume of the mould cavity (4 ; 24 ; 57) is filled at a lower rate of flow than that prevailing during the preceding filling operation.

2. A process according to Claim 1, characterised in that the stored portion of mixture is displaced under a defined pressure.

3. A process according to Claims 1 or 2, characterised in that the mixture located in the mould cavity (4 ; 24 ; 57) is also kept under pressure at least sometimes during the curing process.

4. A process according to Claim 3, characterised in that the pressure applied during the curing phase can be altered.

**Revendications**

1. Procédé pour remplir des empreintes (4 ; 24 ; 57) de moules d'un mélange réactionnel d'au moins deux composants réactionnels fluides formant un plastique massif, selon lequel on amène les composants de mélange dans une zone de mélange (6 ; 26 ; 54), où ils sont mélangés pendant le passage à travers cette zone, et on dirige ensuite le mélange dans la cavité de moule (4 ; 24 ; 57), ainsi que dans une cavité supplémentaire (11 ; 31 ; 52 ; 53) qui n'existe que temporairement, la quantité de mélange introduite dans l'ensemble des deux cavités étant ajustée pour le volume de la cavité ou empreinte de moule (4 ; 24 ; 57) donnant la forme à la pièce, caractérisé en ce que l'on agrandit la cavité de moule (4 ; 24 ; 57) de la cavité supplémentaire (11 ; 31 ; 52 ; 53) pendant l'introduction du mélange réactionnel, on ne remplit l'ensemble des cavités qu'incomplètement de mélange réactionnel, on refoule dans la cavité ou empreinte de moule (4 ; 24 ; 57) au moins une partie du mélange réactionnel accumulé dans la cavité supplémentaire (11 ; 31 ; 52 ; 53), par réduction de la cavité supplémentaire, après la fin de l'introduction du mélange, à un moment présélectionné de la phase fluide du mélange réactionnel, et on réduit le volume de la cavité supplémentaire (11 ; 31 ; 52 ; 53) de telle manière que le remplissage complet final du volume de l'empreinte (4 ; 24 ; 57) s'effectue à une vitesse d'écoulement plus faible que pendant l'opération de remplissage qui a précédé.

2. Procédé selon la revendication 1, caractérisé en ce que l'on produit le refoulement de la portion accumulée du mélange sous une pression définie.

3. Procédé selon la revendication 1 ou 2, caractérisé en ce que l'on maintient le mélange contenu dans l'empreinte (4 ; 24 ; 57) au moins temporairement sous pression, également pendant le durcissement.

4. Procédé selon la revendication 3, caractérisé en ce que la pression appliquée pendant la phase de durcissement est variable.

FIG. 1   FIG. 2   FIG. 3

FIG. 4   FIG. 5

FIG. 6

FIG. 7